Europäisches Patentamt

European Patent Office

Office européen des brevets

(11) Numéro de publication : **0 495 740 A1**

## (12) DEMANDE DE BREVET EUROPEEN

(21) Numéro de dépôt : **92460001.8**

(22) Date de dépôt : **14.01.92**

(51) Int. Cl.⁵ : **F16H 55/56**

(30) Priorité : **16.01.91 FR 9100540**

(43) Date de publication de la demande :
**22.07.92 Bulletin 92/30**

(84) Etats contractants désignés :
**CH DE IT LI**

(71) Demandeur : **Société Canadienne
POWERBLOC IBC Canada
300 Labonté
Drummondville, Québec 2JC 6X9 (CA)**

(72) Inventeur : **Gourdon, Eric
8, rue du Calvaire, Treize Vents
F-85590 Les Epesses (FR)**

(74) Mandataire : **Le Guen, Louis François
CABINET Louis LE GUEN 38, rue Levavasseur
B.P. 91
F-35802 Dinard Cédex (FR)**

(54) **Poulie de variateur automatique de vitesse.**

(57)   La présente invention concerne une poulie pour variateur automatique de vitesse dont le bruit de fonctionnement est diminué par rapport aux poulies connues à ce jour.

Elle comprend un flasque fixe monté solidaire d'un arbre d'entraînement d'un moteur et un flasque mobile prévu pour pouvoir coulisser axialement sur ledit arbre, les flasques ayant une forme tronconique pour former entre eux une gorge en "V" dans laquelle est montée une courroie trapézoïdale, une cloche étant montée solidaire d'une extrémité de l'arbre pour former une première rampe inclinée en regard d'une seconde rampe inclinée prévue à l'arrière du flasque mobile, des masselottes prenant appui sur chacune des rampes lorsqu'elles sont soumises à des forces centrifuges engendrées par la rotation de la poulie, un ressort de rappel hélicoïdal monté axialement sur l'arbre étant prévu pour exercer une force de rappel qui s'oppose à la force d'action axiale des masselottes.

Le flasque mobile (3) est prolongé, vers l'arrière, par un corps annulaire axial (8) solidaire, sur son arrière, d'un manchon coaxial (9) monté coulissant axialement sur l'arbre d'entraînement (2), une bague axiale (12) étant montée, à l'avant du corps annulaire (8) solidaire sur l'arbre (2) et coulissant sur la surface interne du corps annulaire (8).

FIG. UNIQUE

EP 0 495 740 A1

La présente invention concerne une poulie pour variateur automatique de vitesse dont le bruit de fonctionnement est diminué par rapport aux poulies connues à ce jour.

On connaît de telles poulies et on peut citer à titre d'exemple les documents de brevet FR-A-2 504 635, FR-A-2 573 157, CA-A-944 699, CA-A-1 212 559 et la demande de brevet n° 90 01033 déposée au nom d'IBC EUROPE le 25/01/90.

Généralement, une poulie pour variateur automatique de vitesse comprend un flasque fixe monté solidaire d'un arbre d'entraînement et un flasque mobile en translation sur ledit arbre. Les flasques ont une forme tronconique et forment entre eux une gorge en "V" dans laquelle est montée une courroie trapézoïdale. Une cloche est montée solidaire de l'extrémité de l'arbre qui est opposée au flasque fixe. Elle forme une première rampe inclinée. Une seconde rampe inclinée est prévue à l'arrière du flasque mobile. Des masselottes prennent appui sur chacune des rampes lorsqu'elles sont soumises à des forces centrifuges engendrées par la rotation de la poulie, obligeant le flasque mobile à se déplacer vers le flasque fixe et à réduire ainsi le diamètre d'enroulement de la courroie sur la poulie. Un ressort de rappel hélicoïdal monté axialement sur l'arbre est prévu pour exercer une force de rappel qui s'oppose à la force d'action axiale des masselottes. A une vitesse donnée, un équilibre particulier est atteint lorsque la force du ressort compense exactement la force d'action des masselottes.

De telles poulies sont le siège d'un bruit relativement intense dont les origines sont multiples. Ce bruit est en quelque sorte amplifié à la fréquence de résonance de la poulie et, en particulier, à la fréquence de résonance des flasques de la poulie.

Le but de la présente invention est de prévoir des moyens qui permettent de réduire le bruit engendré par une poulie pour variateur automatique de vitesse.

Suivant une caractéristique de l'invention, il est prévu une poulie de variateur automatique de vitesse comprenant un flasque fixe monté solidaire d'un arbre d'entraînement d'un moteur et un flasque mobile prévu pour pouvoir coulisser axialement sur ledit arbre, les flasques ayant une forme tronconique pour former entre eux une gorge en "V" dans laquelle est montée une courroie trapézoïdale, une cloche étant montée solidaire de l'extrémité de l'arbre qui est opposée au flasque fixe pour former une première rampe inclinée en regard d'une seconde rampe inclinée prévue à l'arrière du flasque mobile, des masselottes prenant appui sur chacune des rampes lorsqu'elles sont soumises à des forces centrifuges engendrées par la rotation de la poulie, obligeant le flasque mobile à se déplacer vers le flasque fixe et à réduire ainsi le diamètre d'enroulement de la courroie sur la poulie, un ressort de rappel hélicoïdal monté axialement sur l'arbre étant prévu pour exercer une force de rappel qui s'oppose à la force d'action axiale des masselottes, dans laquelle le flasque mobile est prolongé, vers l'arrière, par un corps annulaire axial solidaire, sur son arrière, d'un manchon coaxial monté coulissant axialement sur l'arbre d'entraînement, une bague axiale étant montée, à l'avant du corps annulaire solidaire sur l'arbre et coulissant sur la surface interne du corps annulaire.

Suivant une autre caractéristique, la bague est constituée d'une matière plastique thermoplastique.

Suivant une autre caractéristique, la bague est constituée de polyester thermoplastique chargé de fibres de verre.

Suivant une autre caractéristique, la bague est constituée d'une matière plastique thermodurcissable.

Suivant une autre caractéristique de l'invention, il est prévu une poulie de variateur automatique de vitesse comprenant un flasque fixe monté solidaire d'un arbre d'entraînement d'un moteur et un flasque mobile prévu pour pouvoir coulisser axialement sur ledit arbre, les flasques ayant une forme tronconique pour former entre eux une gorge en "V" dans laquelle est montée une courroie trapézoïdale, une cloche étant montée solidaire de l'extrémité de l'arbre qui est opposée au flasque fixe pour former une première rampe inclinée en regard d'une seconde rampe inclinée prévue à l'arrière du flasque mobile, des masselottes prenant appui sur chacune des rampes lorsqu'elles sont soumises à des forces centrifuges engendrées par la rotation de la poulie, obligeant le flasque mobile à se déplacer vers le flasque fixe et à réduire ainsi le diamètre d'enroulement de la courroie sur la poulie, un ressort de rappel hélicoïdal monté axialement sur l'arbre étant prévu pour exercer une force de rappel qui s'oppose à la force d'action axiale des masselottes, le flasque mobile étant prolongé, vers l'arrière, par un corps annulaire axial solidaire, à son extrémité arrière, d'une première bague coaxiale prévue pour coulisser axialement sur l'arbre, une seconde bague coaxiale solidaire de l'arbre et en appui contre un épaulement de l'arbre étant prévue pour coulisser sur la surface interne du corps annulaire, dans laquelle les bagues sont constituées d'une matière plastique thermoplastique.

Suivant une autre caractéristique de l'invention les bagues sont constituées de polyester thermoplastique chargé de fibres de verre.

Suivant une autre caractéristique de l'invention, il est prévu une poulie de variateur automatique de vitesse comprenant un flasque fixe monté solidaire d'un arbre d'entraînement d'un moteur et un flasque mobile prévu pour pouvoir coulisser axialement sur ledit arbre, les flasques ayant une forme tronconique pour former entre eux une gorge en "V" dans laquelle est montée une courroie trapézoïdale, une cloche étant montée solidaire de l'extrémité de l'arbre qui est opposée au flasque fixe pour former une première rampe inclinée en regard d'une seconde rampe inclinée prévue à l'arrière du flasque mobile, des masselottes prenant appui sur chacune des rampes lorsqu'elles sont soumises à des forces centrifuges engendrées par la rotation de la poulie, obligeant le flasque mobile à se déplacer vers le flasque fixe et à réduire ainsi le diamètre d'enroulement de la courroie sur la poulie, un ressort de rappel hélicoïdal monté axialement sur l'arbre étant prévu pour exercer une force de rappel qui s'oppose à la force d'action axiale des masselottes, le flasque mobile étant prolongé, vers l'arrière, par un corps annulaire axial solidaire, à son extrémité arrière, d'une première bague coaxiale prévue pour coulisser axialement sur l'arbre, une seconde bague coaxiale solidaire de l'arbre et en appui contre un épaulement de l'arbre étant prévue pour coulisser sur la surface interne du corps annulaire, dans laquelle les bagues sont constituées d'une matière plastique thermodurcissable.

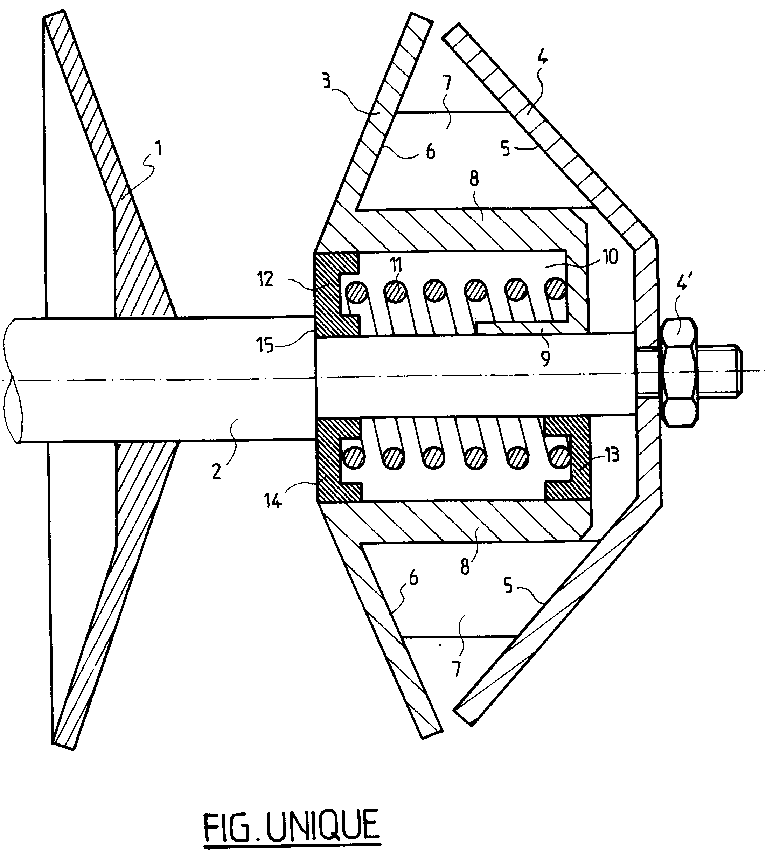

Les caractéristiques de l'invention apparaîtront clairement à la lecture de la description suivante de deux exemples de réalisation, ladite description étant faite en relation avec le dessin joint dont la Fig. montre une poulie selon l'invention qui est représentée, au-dessus de l'axe, selon le premier mode de réalisation et, au-dessous de l'axe, le second mode de réalisation.

Une poulie de variateur automatique de vitesse selon l'invention comprend un flasque fixe 1 monté solidaire d'un arbre d'entraînement 2 d'un moteur (non représenté) et un flasque mobile 3 coaxial au flasque 1. Les flasques 1 et 3 ont chacun une forme tronconique de manière à former entre eux une gorge en forme de "V" dans laquelle s'enroule une courroie trapézoïdale.

Une cloche 4 est montée, au moyen d'un écrou 4', solidaire de l'extrémité de l'arbre d'entraînement 2 qui est opposée au flasque fixe 1. Sa face interne, en regard du flasque mobile 3, constitue une première rampe inclinée 5. Une seconde rampe inclinée 6, en regard de la première rampe 5, est prévue à l'arrière du flasque mobile 3. Des masselottes 7 prennent appui sur chacune des rampes 5 et 6 lorsqu'elles sont soumises à des forces centrifuges engendrées par leur rotation autour de l'axe de la poulie.

Notons que des moyens (non représentés) sont prévus pour assurer une liaison en rotation des masselottes 7 avec le flasque mobile 3 et, éventuellement, la cloche 4.

Le flasque mobile 3 est prolongé, vers l'arrière, par un corps annulaire axial 8.

Selon un premier mode de réalisation montré au-dessus de l'axe sur la Fig., le corps annulaire 8 du flasque mobile 3 est solidaire d'un manchon coaxial 9 monté coulissant axialement sur l'arbre d'entraînement 2. Le manchon 9 crée une gorge borgne 10 au fond de laquelle s'appuie une première extrémité d'un ressort hélicoïdal et axial 11. L'autre extrémité du ressort 11 est en appui contre le fond d'une rainure prévue sur une bague axiale 12 montée, à l'avant du corps annulaire 8, solidaire, par exemple montée à force, sur l'arbre 2 et coulissant sur la surface interne du corps annulaire 8.

Dans ce mode de réalisation, la présence de la bague 12 a pour effet d'augmenter la fréquence de résonance du flasque mobile 3.

Dans un second mode de réalisation montré à la partie inférieure de la Fig., le corps annulaire 8 du flasque mobile 3 est solidaire, à son extrémité arrière, d'une première bague coaxiale 13 prévue pour coulisser axialement sur l'arbre 2. Une seconde bague coaxiale 14 solidaire de l'arbre 2 et en appui contre un épaulement de l'arbre 2 est prévue pour coulisser sur la partie avant de la surface interne du corps annulaire 8.

Le ressort hélicoïdal 11 est en appui, par ses deux extrémités, sur le fond de rainures respectivement prévues sur les bagues 13 et 14.

On a trouvé qu'en utilisant pour les bagues 11, 12 et 13 d'un mode de réalisation ou de l'autre un matériau plastique prévu pour l'amortissement des vibrations, on réduisait considérablement le niveau de bruit de la poulie. Ce matériau présente un faible module d'élasticité et est, par exemple, un thermoplastique tel qu'un polyester thermoplastique chargé de fibres de verre ou une d'une matière thermodurcissable.

Le résultat est un changement de la fréquence de résonance de la poulie vers des fréquences plus élevées en même temps qu'un amortissement des vibrations prenant naissance sur le flasque mobile 3 de la poulie.

## Revendications

1) Poulie de variateur automatique de vitesse comprenant un flasque fixe monté solidaire d'un arbre d'entraînement d'un moteur et un flasque mobile prévu pour pouvoir coulisser axialement sur ledit arbre, les flasques ayant une forme tronconique pour former entre eux une gorge en "V" dans laquelle est montée une courroie trapézoïdale, une cloche étant montée solidaire de l'extrémité de l'arbre qui est opposée au flasque fixe pour former une première rampe inclinée en regard d'une seconde rampe inclinée prévue à l'arrière du flasque mobile, des masselottes prenant appui sur chacune des rampes lorsqu'elles sont soumises à des forces centrifuges engendrées par la rotation de la poulie, obligeant le flasque mobile à se déplacer vers le flasque fixe et à réduire ainsi le diamètre d'enroulement de la courroie sur la poulie, un ressort de rappel hélicoïdal monté axialement sur l'arbre étant prévu pour exercer une force de rappel qui s'oppose à la force d'action axiale des masselottes, caractérisée en ce que le flasque mobile (3) est prolongé, vers l'arrière, par un corps annulaire axial (8) solidaire, sur son arrière, d'un manchon coaxial (9) monté coulissant axialement sur l'arbre d'entraînement (2), une bague axiale (12) étant montée, à l'avant du corps annulaire (8) solidaire sur l'arbre (2) et coulissant sur la surface interne du corps annulaire (8).

2) Poulie selon la revendication 1, caractérisée en ce que ladite bague (12) est constituée d'une matière plastique thermoplastique.

3) Poulie selon la revendication 2, caractérisée en ce que ladite bague (12) est constituée de polyester thermoplastique chargé de fibres de verre.

4) Poulie selon la revendication 1, caractérisée en ce que ladite bague est constituée d'une matière plastique thermodurcissable.

5) Poulie de variateur automatique de vitesse comprenant un flasque fixe monté solidaire d'un arbre d'entraînement d'un moteur et un flasque mobile prévu pour pouvoir coulisser axialement sur ledit arbre, les flasques ayant une forme tronconique pour former entre eux une gorge en "V" dans laquelle est montée une courroie trapézoïdale, une cloche étant montée solidaire de l'extrémité de l'arbre qui est opposée au flasque fixe pour former une première rampe inclinée en regard d'une seconde rampe inclinée prévue à l'arrière du flasque mobile, des masselottes prenant appui sur chacune des rampes lorsqu'elles sont soumises à des forces centrifuges engendrées par la rotation de la poulie, obligeant le flasque mobile à se déplacer vers le flasque fixe et à réduire ainsi le diamètre d'enroulement de la courroie sur la poulie, un ressort de rappel hélicoïdal monté axialement sur l'arbre étant prévu pour exercer une force de rappel qui s'oppose à la force d'action axiale des masselottes, le flasque mobile (3) étant prolongé, vers l'arrière, par un corps annulaire axial (8) solidaire, à son extrémité arrière, d'une première bague coaxiale (13) prévue pour coulisser axialement sur l'arbre 2, une seconde bague coaxiale (14) solidaire de l'arbre (2) et en appui contre un épaulement (15) de l'arbre (2) étant prévue pour coulisser sur la surface interne du corps annulaire (8), caractérisée en ce que lesdites bagues (13 et 14) sont constituées d'une matière plastique thermoplastique.

6) Poulie selon la revendication 5, caractérisée en ce que lesdites bagues (13 et 14) sont constituées de polyester thermoplastique chargé de fibres de verre.

7) Poulie de variateur automatique de vitesse comprenant un flasque fixe monté solidaire d'un arbre d'entraînement d'un moteur et un flasque mobile prévu pour pouvoir coulisser axialement sur ledit arbre, les flasques ayant une forme tronconique pour former entre eux une gorge en "V" dans laquelle est montée une courroie trapézoïdale, une cloche étant montée solidaire de l'extrémité de l'arbre qui est opposée au flasque fixe pour former une première rampe inclinée en regard d'une seconde rampe inclinée prévue à l'arrière du flasque mobile, des masselottes prenant appui sur chacune des rampes lorsqu'elles sont soumises à des forces centrifuges engendrées par la rotation de la poulie, obligeant le flasque mobile à se déplacer vers le flasque fixe et à réduire ainsi le diamètre d'enroulement de la courroie sur la poulie, un ressort de rappel hélicoïdal monté axialement sur l'arbre étant prévu pour exercer une force de rappel qui s'oppose à la force d'action axiale des masselottes, le flasque mobile (3) étant prolongé, vers l'arrière, par un corps annulaire axial (8) solidaire, à son extrémité arrière, d'une première bague coaxiale (13) prévue pour coulisser axialement sur l'arbre 2, une seconde bague coaxiale (14) solidaire de l'arbre (2) et en appui contre un épaulement (15) de l'arbre (2) étant prévue pour coulisser sur la surface interne du corps annulaire (8), caractérisée en ce que lesdites bagues (13 et 14) sont constituées d'une matière plastique thermodurcissable.

FIG. UNIQUE

EP 0 495 740 A1

## RAPPORT DE RECHERCHE EUROPEENNE

Office européen
des brevets

Numero de la demande

EP 92 46 0001

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-2 122 172 (DAYCO CORP.) * page 5; figures 2,3 * | 1 | F16H55/56 |
| A | | 2-7 | |
| A | DE-A-2 210 132 (IBC EUROPE) * page 5; figure 7 * | 1-7 | |
| P,X, D | FR-A-2 657 406 (IBC EUROPE) | 1 | |
| P,A | * abrégé; figure 1 * | 2-7 | |
| D,A | FR-A-2 504 635 (SOCIETE INDUSTRIELLE DE TRANSMISSION) * figure 1 * | 1 | |
| D,A | FR-A-2 573 157 (LIGIER) * figure 1 * | 1 | |
| D,A | CA-A-944 699 (PERREAULT) * figure 1 * | 1 | |
| D,A | CA-A-1 212 559 (BEAUDOIN) * figure 1 * | 1 | DOMAINES TECHNIQUES RECHERCHES (Int. Cl.5) F16H |

Le présent rapport a été établi pour toutes les revendications

| Lieu de la recherche | Date d'achèvement de la recherche | Examinateur |
|---|---|---|
| LA HAYE | 09 AVRIL 1992 | FLORES E. |

EPO FORM 1503 03.82 (P0402)